# EUROPEAN PATENT APPLICATION

(11) **EP 4 181 053 A1**
(43) Date of publication of application: **17.05.2023**
(21) Application number: 21208549.2
(22) Date of filing: 16.11.2021
(51) Int. Cl.: G06T 5/00

(54) **DETERMINING SPECTRAL REFLECTANCE CHARACTERISTICS**

(71) Applicant: Koninklijke Philips N.V., 5656 AG Eindhoven (NL)
(72) Inventor: TAMMINGA, Stephanus Jacob Gerardus, Eindhoven (NL); WESTERHOF, Willem Auke, Eindhoven (NL)
(74) Representative: Philips Intellectual Property & Standards

(57) **Abstract**

In an embodiment, a method (100) is described. The method determines, as a result of an event, a change in a spectral reflectance characteristic of a target region of an object present in first image data and second image data. The method comprises receiving (102) the first image data and the second image data. The method further comprises identifying (104) a common region, different to the target region, in the first and second image data. A spectral reflectance characteristic of the common region is predicted, based on contextual information associated with the common region, to remain unchanged between the first and second times. The method further comprises determining (106) values of a color parameter associated with the common region and the target region in the first and second image data. The values of the color parameter are used to determine the change in the spectral reflectance characteristic of the target region as a result of the event.

## Description

### FIELD OF THE INVENTION

The invention relates to a method, a non-transitory machine-readable medium and apparatus for determining spectral reflectance characteristics.

### BACKGROUND OF THE INVENTION

Apps are being developed to allow end-users to take images of themselves (e.g., 'selfies') before and after performing a personal care activity (e.g., hair removal) for use in analyzing the performance of the personal care activity. In the case of hair removal, a comparison of the redness of the skin before and after hair removal may be an indicator of irritation and/or skin damage.

A variation in illumination conditions may change the apparent color of an object, as may be observed in before and after images of the object. In an example, over- and underexposure may affect the apparent color. In another example, different types of artificial lights (e.g., incandescent, light-emitting diode (LED) and/or colored lights) may affect the apparent color. In another example, the location (e.g., indoors or outdoors) and/or environmental conditions (e.g., sunlight, overcast sunlight, weather variations, etc.) may affect the apparent color. In another example, a property of an imaging system used for imaging the object may change, which may also cause a change in the apparent color of object in the before and after images.

If a variation in illumination conditions and/or a change in an imaging system property occurs between the before and after image, it may be difficult to perform an accurate color comparison.

An example method for comparing colors under different imaging conditions involves using a calibration target with known colors. A digital image may be adjusted in such a way that the colors in the digital image are calibrated based on the calibration target. This example method may be acceptable in some scenarios such as in professional photography but could be inconvenient for certain scenarios such as where an end-user takes their own images. For example, an end-user may consider it cumbersome to retain and use a calibration target each time a measurement is performed.

### SUMMARY OF THE INVENTION

Aspects or embodiments described herein may relate to determining a change in a spectral reflectance characteristic of an object in such a way that takes into account a difference associated with imaging the object at different times. Aspects or embodiments described herein may obviate one or more problems associated performing a color comparison between images taken at different times.

In a first aspect, a method is described. The method is a computer-implemented method. The method is for determining, as a result of an event, a change in a spectral reflectance characteristic of a target region of an object present in first image data and second image data. The first image data corresponds to a scene comprising the object at a first time prior to occurrence of the event. The second image data corresponds to a scene comprising the object at a second time after the occurrence of the event. The method comprises receiving the first image data and the second image data. The method further comprises identifying a common region, different to the target region, in the first and second image data. The common region has a different apparent color in the first and second image data due to a difference associated with imaging conditions at the first and second times. A spectral reflectance characteristic of the common region is predicted, based on contextual information associated with the common region, to remain unchanged between the first and second times. The method further comprises determining a first value of a color parameter associated with the common region in the first image data. The method further comprises determining a second value of the color parameter associated with the common region in the second image data. The method further comprises determining a third value of the color parameter associated with the target region in the first image data. The method further comprises determining a fourth value of the color parameter associated with the target region in the second image data. The method further comprises determining comparing the first and second values to obtain a color transformation function for reducing a color variation in the target region between the first and second image data due to the difference associated with imaging conditions at the first and second times. The method further comprises determining applying the color transformation function to one of the third value or fourth value to generate a transformed value. The method further comprises determining comparing the transformed value with the other of the third value or fourth value to determine the change in the spectral reflectance characteristic of the target region as a result of the event.

Some embodiments relating to the first and other aspects are now described.

In some embodiments, the method comprises using an image recognition model to identify the common region in the first and second image data.

In some embodiments, the method comprises using a prediction model to predict whether the spectral reflectance characteristic of the common region is to remain unchanged between the first and second times based on an interpretation of the contextual information. In response to predicting that the spectral reflectance characteristic of the common region is to remain unchanged, the method further comprises using the common region for comparing the first and second values.

In some embodiments, the method comprises determining the contextual information based on at least one of: an expected spectral reflectance characteristic of a recognizable feature associated with the common region; a specified type of the scene; and/or temporal information associated with the first and second image data.

In some embodiments, the difference associated with imaging conditions at the first and second times comprises at least one of: a difference in illumination conditions at the first and second times; a difference in terms of type of an imaging system used for imaging at the first and second times; and/or a difference in terms of an imaging setting associated with the imaging system used for imaging at the first and second times.

In some embodiments, the first and second values are each based on an average of a plurality of values of the color parameter derived from the common region in the first and second image data, respectively.

In some embodiments, the method comprises identifying a plurality of common regions in the first and second image data. The spectral reflectance characteristic associated with each identified common region is different. For each common region of the plurality of common regions, the method further comprises comparing the first value with the second value to obtain a color-dependent color transformation function for reducing the color variation in the target region between the first and second image data due to the difference associated with imaging conditions at the first and second times. The color-dependent color transformation function is indicative of a plurality of color transformation factors. Each color transformation factor is associated with a different color channel and is configured to reduce, in its respective color channel, the color variation between the first and second image data due to the difference associated with imaging conditions at the first and second times.

In some embodiments, the method comprises generating third image data by transforming, using the color transformation function, a set of values of the color parameter for the target region of the first image data or the second image data. The generated third image data comprises a set of transformed values of the color parameter for the target region of the first image data or the second image data, respectively.

In some embodiments, the third image data is generated by transforming the second image data using the color transformation function such that the color variation in the target region between the first and second image data due to the difference associated with imaging conditions at the first and second times is reduced between the first and third image data. A comparison of the target region between the first and third image data is indicative of a physical change to the object as a result of the event.

In some embodiments, the object is a subject and the event comprises a treatment performed on the subject.

In some embodiments, the color transformation function is based on a difference between the first and second value of the color parameter associated with the common region in the first and second image data, respectively.

In some embodiments, the color parameter is based on at least one component of a color model system. The method further comprises transforming raw imaging data acquired by an imaging system to generate the first and second image data in accordance with the color model system.

In some embodiments, the at least one component of the color model system comprises one of: hue and/or saturation of a hue-saturation-luminance, HSL-based color model system; or lightness and/or a color coordinate of a color model system specified by International Commission on Illumination, CIE.

In a second aspect, a non-transitory machine-readable medium is described. The non-transitory machine-readable medium stores instructions which, when executed by processing circuitry, cause the processing circuitry to implement the method of the first aspect or related embodiments.

In a third aspect, apparatus is described. The apparatus is for determining, as a result of an event, a change in a spectral reflectance characteristic of a target region of an object present in first image data and second image data. The first image data corresponds to a scene comprising the object at a first time prior to occurrence of the event. The second image data corresponds to a scene comprising the object at a second time after the occurrence of the event. The apparatus comprises processing circuitry communicatively coupled to an interface for receiving the first image data and the second image data. The apparatus further comprises a machine-readable medium storing instructions which, when executed by the processing circuitry, cause the processing circuitry to identify a common region, different to the target region, in the first and second image data. The common region has a different apparent color in the first and second image data due to a difference associated with imaging conditions at the first and second times. A spectral reflectance characteristic of the common region is predicted, based on contextual information associated with the common region, to remain unchanged between the first and second times. The instructions further cause the processing circuitry to determine a first value of a color parameter associated with the common region in the first image data. The instructions further cause the processing circuitry to determine a second value of the color parameter associated with the common region in the second image data. The instructions further cause the processing circuitry to determine a third value of the color parameter associated with the target region in the first image data. The instructions further cause the processing circuitry to determine a fourth value of the color parameter associated with the target region in the second image data. The instructions further cause the processing circuitry to compare the first and second values to obtain a color transformation function for reducing a color variation in the target region between the first and second image data due to the difference associated with imaging conditions at the first and second times. The instructions further cause the processing circuitry to apply the color transformation function to one of the third value or fourth value to generate a transformed value. The instructions further cause the processing circuitry to compare the transformed value with the other of the third value or fourth value to determine the change in the spectral reflectance characteristic of the target region as a result of the event.

Certain aspects or embodiments described herein may provide an accurate color comparison between before and after images e.g., without using additional equipment such as a color calibration target. Such an accurate color comparison may yield information about a change of physical property that has occurred in an object. Such information may be used for various purposes as described herein.

These and other aspects of the invention will be apparent from and elucidated with reference to the embodiment(s) described hereinafter.

### BRIEF DESCRIPTION OF THE DRAWINGS

Exemplary embodiments of the invention will now be described, by way of example only, with reference to the following drawings, in which:
Fig. 1 refers to a method for determining spectral reflectance characteristics according to an embodiment;
Fig. 2 is a schematic drawing of a system for determining spectral reflectance characteristics according to an embodiment;
Fig. 3 is a schematic representation of a set of example images depicting a color change;
Fig. 4 refers to a method of identifying regions according to an embodiment;
Fig. 5 refers to a method of determining contextual information according to an embodiment;
Fig. 6 refers to a method of obtaining a color transformation function according to an embodiment;
Fig. 7 refers to a method of generating image data according to an embodiment;
Fig. 8 refers to a method of transforming imaging data according to an embodiment;
Fig. 9 is a schematic drawing of a machine-readable medium for determining spectral reflectance characteristics according to an embodiment; and
Fig. 10 is a schematic drawing of apparatus for determining spectral reflectance characteristics according to an embodiment.

### DETAILED DESCRIPTION OF THE EMBODIMENTS

As used herein, the term "spectral reflectance characteristic" refers to a spectral response (i.e., a spectrally-dependent response) of an object to (visible and/or non-visible) light incident on the object that depends on a physical property of the object (e.g., the surface of the object and/or any layers under the surface). Spectral components (i.e., wavelengths) of the incident light are reflected in such a way that depends on the physical property of the object. By way of example, light incident on the object may interact with the object such that certain spectral components may be absorbed and/or reflected differently to other spectral components due to this physical property. In other similar words, the "spectral reflectance characteristic" may refer to a characteristic way in which the object affects (e.g., changes) the reflected spectral intensity of light due to the physical property of the object.

As used herein, the term "object" may refer to anything that might change color in various scenarios. In the example given above, the object is a subject such as a person. However, in other examples, the "object" could refer to an item of interest such as a product in a supply chain, a crop or plant such as in an agricultural or horticultural setting, etc.

As used herein, the term "image data" comprises or refers to a representation of imaging data acquired by an imaging system such as a camera configured to image a scene. In some cases, the image data may comprise at least part of the imaging data acquired by the imaging system (e.g., part of an image or an entire image of the imaged scene). In some cases, the image data may be a transformed version of the imaging data (e.g., after transformation by image processing such as compression, conversion to another file format, etc.).

As used herein, the term "apparent color" refers to a perceived color of an object, such as may be apparent to an imaging system. The apparent color may depend on the both the spectral reflectance characteristic of the object and the imaging conditions such as the color temperature of the illumination and/or the settings of the imaging system itself (such as white balance).

As used herein, the term "color parameter" refers to a measure of color based on a color model system. Various color model systems can be used to define such measurements of color such as a hue-saturation-luminance, HSL-based color model system or a color model system specified by International Commission on Illumination, CIE (e.g., the CIELAB and CIELUV color spaces). A "value" of the color parameter may refer to a certain "coordinate" or "color magnitude" in the color model system that corresponds to a certain color.

As described above, a physical property of at least part of an object may change for various reasons. Such a change in physical property may cause a change in the spectral reflectance characteristic of the object. Therefore, identifying a change in a spectral reflectance characteristic may be indicative of a change in a physical property of an object.

An example physical property that may affect the spectral reflectance characteristic associated with an object such as a face or body feature includes skin irritation (e.g., of the facial skin or body skin). In some cases, the skin irritation may be due to a hair removal procedure, skin care procedure or other personal care activity that causes some physical change in a region on the skin affected by the personal care activity. In this case, the irritated skin may appear redder than usual. As such, the "spectral reflectance characteristic" of the skin changes, at least temporarily, as a result of the personal care activity.

Another example physical property that may affect the spectral reflectance characteristic associated with an object such as food includes freshness and/or ripeness. In some cases, ripening, improving or deterioration of food may cause a physical change in the food, which may be apparent from a change in the spectral reflectance characteristic associated with the food.

Therefore, an object that has a physical property that changes over time may be imaged before and after an event (e.g., a process) occurs where such an event may cause a change in the physical property. This change may be observable through imaging in terms of a change in spectral reflectance characteristic.

Depending on the object and the possible physical property changes that can happen to the object as a result of the event, a detected change in spectral reflectance characteristic can reveal information about the event. A color comparison of a before and after image of an object may be used to determine a change in a spectral reflectance characteristic of an object, and hence determine if a change in physical property has occurred between the times when the before and after images were obtained.

However, as noted above, there are circumstances where it may be difficult to perform an accurate color comparison between before and after images. For example, if the imaging conditions vary between when the before and after images are taken, it may be difficult to accurately determine the colors in the images without resorting to use of a color calibration target.

Certain embodiments described herein may provide an accurate color comparison between before and after images e.g., without using additional equipment such as a color calibration target. Such an accurate color comparison may yield information about a change of physical property that has occurred in an object. Such information may be used for various purposes as described herein.

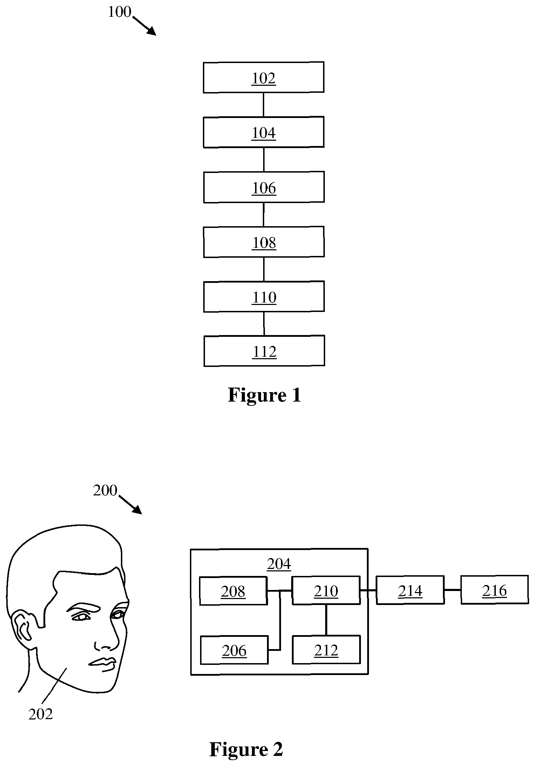

Fig. 1 refers to a method 100 for determining spectral reflectance characteristics according to an embodiment. The method 100 may be computer-implemented (e.g., by processing circuitry, as described in more detail below).

The method 100 determines, as a result of an event, a change in a spectral reflectance characteristic of a target region of an object present in first image data and second image data. The first image data corresponds to a scene comprising the object at a first time prior to occurrence of the event. The second image data corresponds to a scene comprising the object at a second time after the occurrence of the event.

The target region may refer to a (spatial) region of interest of the object which maps on to a part of the first and second image data as a result of imaging (e.g., certain pixels in the image data may correspond to the target region). The target region may be of interest since it may be subject to a change due to the occurrence of the event.

The method 100 comprises, at block 102, receiving the first image data and the second image data. In some cases, the image data may be received: directly from an imaging system; from a communications network and/or from a memory device accessible to the processing circuitry, all of which are described in more detail below.

The method 100 further comprises, at block 104, identifying a common region, different to the target region, in the first and second image data. The common region has a different apparent color in the first and second image data due to a difference associated with imaging conditions at the first and second times. A spectral reflectance characteristic of the common region is predicted, based on contextual information associated with the common region, to remain unchanged between the first and second times.

The common region may refer a spatial region observable in both the first and second image data (e.g., on the object, adjacent to the object or otherwise visible in the scene represented by the first and second image data). The common region may refer to a (spatial) region observable in both the first and second image data which maps on to a part of the image data as a result of imaging (e.g., certain pixels in the first and second image data may correspond to the common region).

Certain parts of the scene may be considered to have a constant or near constant spectral reflectance characteristic. Thus, any apparent color change in the common region (where it is otherwise expected that the spectral reflectance characteristic is to remain unchanged) may be indicative of the color change being due to the difference associated with imaging conditions at the first and second times. In other words, the apparent color change may not be attributed to any physical change in the object. Instead, the apparent color change may be attributed to a different factor such as a difference in illumination conditions and/or a difference in the imaging system used to acquire to first and second image data.

By way of example, the illumination conditions and/or imaging system settings may be different at the first and second times, which may cause the common region to appear to have a different apparent color even though no change in physical property has occurred in the common region. Based on a prediction that the spectral reflectance characteristic of the common region is to remain unchanged, any detected color change of the common region may be used to establish and/or quantify the change in the imaging conditions. It may follow that the change in the apparent color in the common region may be used to compensate for, or reduce the effect of, the apparent color change in another part of the image data (e.g., the 'target region').

As described above, the prediction that the spectral reflectance characteristic is to remain unchanged between the first and second times is based on contextual information associated with the common region. Such a prediction may be made by a "prediction model" as referred to below. The contextual information may refer to an understanding about the physical property of the common region. For example, it may be known or expected that the common region is associated with an object (i.e., a different object to the object comprising the target region or another part of the object comprising the target region) that does not change its spectral reflectance characteristic. Thus, if there is information available about what the common region is in reality, it may be predicted that the common region has a spectral reflectance characteristic that is to remain unchanged. In another example, contextual information may refer to any knowledge or understanding about the physical property of the common region that may be used to predict whether or not the spectral reflectance characteristic of the common region is to remain unchanged over a certain period of time. Further details of what the common region may be and/or how it may be determined are described below.

As described above, the spectral reflectance characteristic of the common region is predicted to remain unchanged. In some cases, this may mean that there is zero change in the spectral reflectance characteristic between the first and second times. In some cases, this may mean that there is some tolerance for a non-substantial marginal change in the spectral reflectance characteristic. There may be a certain amount of tolerated change in the spectral reflectance characteristic associated with the common region in order for the common region to be considered as providing a suitable reference for distinguishing between: color changes due to a change in the physical property of the common region between the first and second times; and color changes due to a change in the imaging conditions between the first and second times. In other similar words, the common region may be used as a reference for determining the contribution of the imaging conditions to the apparent color change (since it is predicted that there is no change or no substantial change in the spectral reflectance characteristic of the common region).

The method 100 further comprises, at block 106, determining a first value of a color parameter associated with the common region in the first image data. Block 106 further comprises determining a second value of the color parameter associated with the common region in the second image data. Block 106 further comprises determining a third value of the color parameter associated with the target region in the first image data. Block 106 further comprises determining a fourth value of the color parameter associated with the target region in the second image data.

The method 100 further comprises, at block 108, comparing the first and second values to obtain a color transformation function for reducing a color variation in the target region between the first and second image data due to the difference associated with imaging conditions at the first and second times. As referred to previously, the common region may be used as a reference for determining the contribution of the imaging conditions to the apparent color change. The comparison of the first and second values of the color parameter associated with the common region may allow the contribution of the imaging conditions to the apparent color change to be quantified.

The resulting quantity may then be used to compensate for, or at least reduce the effect of, the difference in the imaging conditions at the first and second times so that the change in the spectral reflectance characteristic of the target region can be determined.

In this regard, the method 100 further comprises, at block 110, applying the color transformation function to one of the third value or fourth value to generate a transformed value (e.g., a transformed value of the color parameter). The method 100 further comprises, at block 112, comparing the transformed value with the other of the third value or fourth value to determine the change in the spectral reflectance characteristic of the target region as a result of the event.

Since the color variation in the target region due to the difference associated with the imaging conditions at the first and second times is reduced (i.e., by application of the color transformation function at block 110), any detected color change in the target region between the first and second times may be due to a physical change associated with the object since this detected color change may be due to a change in the spectral reflectance characteristic rather than being due to a change in the imaging conditions. The detected color change in the target region may represent a "relative" change in the color, thus obviating or reducing the need for determining the absolute color at the first and second times (e.g., using a color calibration target).

Various embodiments described herein, including method 100, may allow a relative change in spectral reflectance characteristic of a target region to be measured, which may facilitate accurate analysis of the target region (e.g., to examine the effect of an event on the target region) and/or reduce or avoid the need to perform color calibration to compensate for the difference associated with imaging conditions at the first and second times.

Fig. 2 is a schematic drawing of a system 200 for determining spectral reflectance characteristics according to an embodiment. The system 200 refers to a subject 202 (such as a person). In some cases, the target region may be at least part of the subject 202 such as their face or another part of the body.

The system 200 comprises user equipment 204. Examples of user equipment 204 include smart phones, tablets, smart mirrors, Internet of Things (IoT) devices, etc.

The user equipment 204 comprises an imaging system 206 such as a camera for obtaining imaging data. In some cases, the user equipment 204 further comprises an illumination system 208 for providing illumination (e.g., during imaging by the imaging system 206).

The user equipment 204 further comprises processing circuitry 210 for implementing the functionality of the user equipment 204 (e.g., running applications, controlling the functionality of the imaging system 206 and/or the illumination system 208, receiving and/or sending data, etc.). As depicted by Fig. 2, the processing circuitry 210 is communicatively coupled to the imaging system 206 and the illumination system 208. In some cases, the processing circuitry 210 implements various embodiments described herein e.g., method 100 and any related embodiments.

The user equipment 204 further comprises a memory device 212 (e.g., a non-transitory machine-readable medium or any other suitable storage) for storing data (e.g., imaging data and/or instructions for causing the processing circuitry 210 to implement the functionality of the user equipment 204).

The processing circuitry 210 is further communicatively coupled to a communications network 214 (e.g., via a communications interface, not shown) such as comprising a radio access network (e.g., for cellular communications via a 4G/5G network, etc.) and/or a local area network (LAN) such as a wireless LAN. Data may be communicated between the user equipment 204 and a remote computing system 216 via the communications network 214. In some cases, the remote computing system 216 (e.g., a server, cloud infrastructure, etc.) may comprise processing circuitry (not shown) for implementing the functionality of various embodiments described herein e.g., method 100 and any related embodiments.

Thus, either or both of the processing circuitry 210 and the remote computing system 216 may implement the functionality of various embodiments described herein. In this regard and for some cases, the processing circuitry 210 may receive the first and second image data (directly from the imaging system 206 and/or from the memory device 212). For some cases, the remote computing system 216 may receive the first and second image data (e.g., from the processing circuitry 210 via the communications network 214 and/or retrieve previously received first and second image data from a local memory device accessible to the remote computing system 216).

Various embodiments relating to the above are now described.

An image analysis (e.g., recognition, segmentation, etc.) may be performed to determine whether the first and second image data comprise a common region. For example, while one of the first and second image data may comprise a suitable region that has a spectral reflectance characteristic that remains unchanged, this region may not be present in both the first and second image data. Therefore, the image analysis may check that both the first and second image data comprise a suitable region to represent the common region. In some cases, the common region may be recognized by the image analysis, which may help with the prediction of whether or not the spectral reflectance characteristic is likely to remain unchanged between the first and second times. In some cases, the image analysis may be based on artificial intelligence (AI) techniques or other "classical" or "deterministic" image analysis techniques.

In the case where the object is a subject such as a person, certain regions on the subject may have a spectral reflectance characteristic that is expected to remain unchanged between the first and second times. For example, there may be certain cases where the eye (iris) color (not the white around it) may have a constant/unchanging color under certain illumination conditions (e.g., brown eyes may not change color substantially). A person's iris color may change slowly with age, but not within minutes or hours, or even weeks. Therefore, there may be cases where the iris may be considered sufficiently color stable for use as a "common region".

A possible way to implement using the iris as the common region is now described.

Face landmark detection may be used to detect the location of the eyes within the face in the scene represented by the first and second image data. Segmentation may be used to distinguish between the iris, the pupil and the white of the eye.

Upon identification of the part of the first and second image data corresponding to the iris, the color (e.g., average color) of the iris is measured in the first image data (i.e., the "first value" of the color parameter referred to in block 106) at the first time, prior to occurrence of the event. Since the iris typically comprises intricate patterns, the average color of the total iris structure may be considered to be a suitable reference color although other stable colors could be derived from the total iris structure. The size of the pupil may have an influence on the measured values as well. However, the size of the pupil may be influenced by variations in the illumination conditions. For example, increasing a graphical user interface (GUI) brightness may minimize pupil diameter during measurements (e.g., a GUI of the user equipment 204). Such a (deliberate) increase in GUI brightness may have utility for increasing the size of the measurable area of the iris to improve accuracy of the color measurement.

The iris color measurement may also be performed after the event has occurred (i.e., at the second time) to obtain the "second value" of the color parameter. In accordance with block 108 of the method 100, the first and second values are compared to obtain the color transformation function (which may also be referred to as a "transfer function"). In some cases, the color transformation function can be calculated (potentially for each color channel) to compensate for, or at least reduce the effect of, a color variation due to the imaging conditions in at least the target region of the first or second image data.

Such a color transformation function may be applied to the third or fourth value of the color parameter in such a way that when a comparison is made between target region in the first and second image data, the color change caused by the change in imaging conditions is taken into account so that any detected change in color in the target region is due to a physical change associated with the target region instead of the change in imaging conditions.

Therefore, through application of the color transformation function, the measurements can be processed in such a way that physical changes as a result of the event (such as shaving-induced redness where the event comprises shaving) can be performed using the "before and after" first and second image data, respectively.

The iris is not the only color-stable element (i.e., an element that has a spectral reflectance characteristic that remains unchanged) that may be present in a scene that could be used as the common region. In the case where the object is a person, examples of potentially color-stable elements include: hair, certain parts of the skin (i.e., parts of the skin not subject to any treatment that changes the spectral reflectance characteristic of the skin as a result of the treatment), clothing and/or any other objects in the foreground or background such as a wall.

In any of these other examples, similar principles to the iris example may be applied. For example, the average color of the common region may be extracted to deal with the range of colors in the common region. In the case of the "clothing" example or indeed in any other applicable example, the nature of the reflection may affect the reliability of the color information. For example, shiny surfaces may cause specular reflections, which can at least partially mask color information, rendering such surfaces unsuitable for use as the reference "common region". Therefore, in some cases, non-shiny materials may be used over shiny materials to maximize the color information used for calculating the color transformation function.

Aside from the above cases, any element in the image data that can be considered unchanging in color (e.g., as predicted due to the contextual knowledge) and which can be reliably recognized and segmented could be used to perform at least a first-order color correction as part of implementing any embodiment described herein.

An example implementation of performing a first-order color correction is described below.

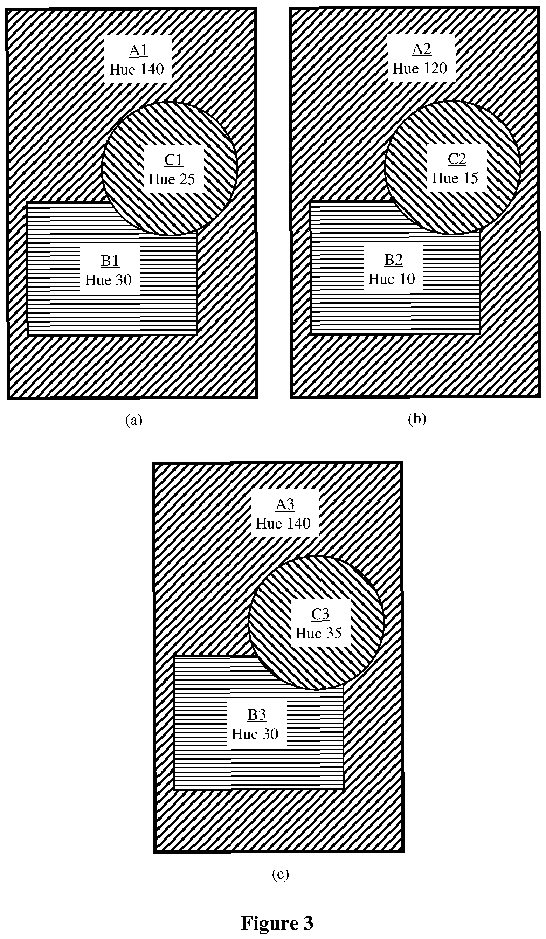

Fig. 3 is a schematic representation of a set of (three) example images depicting a color change.

Image (a) refers to a "before" image corresponding to the first image data and depicts a scene comprising three elements: a background, 'A1', clothing, 'B1' and a face 'C1'. The color of each of these elements may be represented using a color model system such as the HSL color model system (although another color model system may be used). In this example, the background A1 has a hue of 140, the clothing B1 has a hue of 30 and the face has a hue of 25.

Image (b) refers to an "after" image corresponding to the second image data and depicts the same scene after an event has taken place. The elements in the scene are now re-labelled as background, 'A2', clothing, 'B2' and face 'C2'. In this example, the background A2 has a hue of 120, the clothing B1 has a hue of 10 and the face has a hue of 15.

Assuming the clothing represents the "common region" that is expected to have a spectral reflectance characteristic that remains unchanged, it can be seen that a change of hue has occurred of "minus 20" in spite of this expectation. This change may indicate that the imaging conditions have changed between the first and second times. This suggests that the depicted change in the hue of the target region (i.e., the face, C1/C2) is not wholly due to the occurrence of the event. Instead, the change may at least partially be due to the change in imaging conditions that has occurred between the first and second times (as indicated by the difference in hue for the clothing which was expected to have a spectral reflectance characteristic that remains unchanged between the first and second times).

The factor "minus 20" derived from comparing the hue associated with the background "common region" B1 and B2 may represent the obtained "color transformation function". In this case, the color transformation function is not color-dependent and may apply a linear (the same) color transformation factor irrespective of the color channel it is applied to.

Image (c) refers to a compensated version of image (b) which accounts for the difference in imaging conditions when the first and second images (a) and (b) were acquired (i.e., upon implementation of certain embodiments described herein). The elements in the scene are now re-labelled as background, 'A3', clothing, 'B3' and face 'C3'. The color transformation mentioned above has been applied by reversing the effect of the factor "minus 20" on the overall image. That is, a factor of "plus 20" may be applied to the second image data (b) to compensate for, or at least reduce the effect of, the color change due to the imaging conditions. In this example, the background A3 has a hue of 140, the clothing B3 has a hue of 30 and the face C3 has a hue of 35. The application of the color transformation function has yielded the same hue in the backgrounds (as can be recognized by comparing the hue for background B1 and B3).

A comparison of the hue of the face (by comparing C1 and C3) yields the change in spectral reflectance characteristic associated with the face as a result of the event (i.e., "plus 10" in this example). An analysis of this comparison may yield information about the event. For example, in the case of a personal care activity such as shaving, the change in hue in the facial skin may be indicative of skin irritation caused by the shaving. Action may be taken in response to detecting this skin irritation.

Thus, in some embodiments, the color transformation function is based on a difference between the first and second value of the color parameter associated with the common region in the first and second image data, respectively.

However, without correcting for the effect of the difference in the imaging conditions, it may not be possible to accurately quantify the effect of the skin irritation, which may lead to an incorrect action being taken in response to detecting a change in a spectral reflectance characteristic of the target region. The same applies to other types of events in the context of personal care activities and other fields of application.

In some cases, it may not be necessary to calculate the color parameter associated with each segment in the scene in each image data, as depicted by Fig. 3. For example, once the color transformation factor is obtained, this may be applied directly to the third/fourth value derived from the target region in the first or second image data in order to calculated the "transformed value". In other words, it may not be necessary to directly generate the third image (c) in order to apply certain embodiments described herein such as the method 100 (e.g., to save memory, processing costs, etc.).

Providing a common region can be recognized in image data based on a prediction that the common region is expected to have a spectral reflectance characteristic that remains unchanged over a relevant timescale (e.g., between the first and second times), the comparison of the first and second values associated with the common region can be used as a reference for color correction of the target region (or the whole image). Thus, it may be possible to establish whether a target region of an object has truly changed in terms of their physical property, and by how much, regardless of the absolute color values derived from the image data.

The prediction of whether the common region has an unchanging spectral reflectance characteristic may be derived from the contextual information. The types of contextual information that may be useful for identifying the common region may depend on various factors.

In some cases, the timescale over which the first and second images are taken may represent contextual information since a timescale between the first and second times may indicate the likelihood of the spectral reflectance characteristic remaining unchanged. By way of example, a timescale of a few seconds, minutes, hours, days, etc., might be appropriate in some scenarios but not others. For example, an object such as a plant may change its spectral reflectance characteristic based on its level of hydration. Over a timescale of a few minutes or hours, the plant might be a reliable reference. However, over a few days, the plant could change its spectral reflectance characteristic as a result of a difference in hydration. Similar principles may apply to the various examples described herein. For example, the iris of the eye might be unchanged over a few weeks or years but over many years, its spectral reflectance characteristic might change. Therefore, the iris may not be suitable as the reference for such long timescales. Similarly, clothing or hair might be a suitable reference where the timescale involved is a few hours. However, clothing or hair might change their spectral reflectance characteristic over a few days e.g., due to washing, dyeing, etc. Therefore, clothing or hair may not be suitable as the reference for timescales longer than a few hours.

In some cases, an understanding of the physical property of an identified region in the image data that could be a "common region" may provide the contextual information needed to decide whether the identified region could be a "common region". For example, detection and classification of such an identified region may provide the contextual information where the classification may indicate whether or not the identified region is suitable for use as the common region. As noted above, certain materials/objects may be suitable for use as the common region and these may be identified by image recognition techniques.

In some cases, a model may be configured or trained (in the case of an AI model) to decide automatically which region of an image is likely to have an unchanging spectral reflectance characteristic. For example, contextual information in the image data may be recognized by the model. If the model has been trained based on an image data set which indicates the types of regions that are suitable for use as the common region, the trained version of the model may be capable of identifying such types of regions in any image data the model processes.

Based on the above cases, the contextual information may inform whether or not a certain region in the image data can be selected for use as the "common region".

As mentioned above, the color transformation function may be a linear function. In some cases, the color transformation function may be generated based on multiple constant elements in the image data (e.g., a "plurality of common regions" with different values of the color parameter, as described in more detail below), which are all used to create a color-dependent color transformation function for the color correction. Instead of applying the same linear transformation to all colors equally, a polynomial function may be created based on a comparison of the measured color for each of the common regions. In other words, the change in color may depend on the color channel. Therefore, the degree of correction needed may depend on the color channel. In this regard, the color-dependent color transformation function may specify a plurality of color transformation factors, where each color transformation factor is associated with a different color channel and is configured to reduce, in its respective color channel, the color variation between the first and second image data due to the difference associated with imaging conditions at the first and second times.

Various embodiments relating to the above cases and other cases are described below.

In some embodiments, the "difference associated with imaging conditions at the first and second times" comprises at least one of: a difference in illumination conditions at the first and second times; a difference in terms of type of an imaging system used for imaging at the first and second times; and/or a difference in terms of an imaging setting associated with the imaging system used for imaging at the first and second times.

In some cases, the illumination conditions may be varying and result in a different "color temperature" illuminating the object at the different times. In some cases, the illumination may be provided by ambient light. In some cases, the illumination may be provided by the illumination system 208 depicted by Fig. 2 or another illumination system in the vicinity of the subject 202. In some cases, the imaging system 206 may be different at the first and second times, such as may be the case if the user equipment 204 is replaced or if the first and second images are taken by different imaging systems e.g., at different points in a supply chain. In some cases, the difference in terms of the imaging setting may refer to any imaging parameter that can be varied in the imaging system such as white balance, ISO setting, etc. Therefore, the difference associated with the imaging conditions at the first and second times may refer to a difference in terms of the imaging system used and/or the illumination conditions.

In some embodiments, the first and second values are each based on an average of a plurality of values of the color parameter derived from the common region in the first and second image data, respectively.

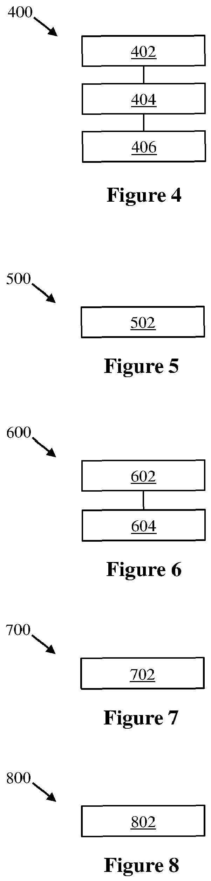

Fig. 4 refers to a method 400 of identifying regions according to an embodiment. The method 400 may be implemented by processing circuitry such as described above. Certain blocks of the method 400 may be omitted for some embodiments, and/or performed in a different order to that depicted. In this embodiment, the method 400 may be used in conjunction with the method 100.

In some embodiments, the method 400 comprises, at block 402, using an image recognition model to identify the common region in the first and second image data.

As referred to above, in some cases, an image recognition model may be based on, for example, a segmentation model, a landmark detection model, etc. The image recognition model may be implemented based on an AI technique and/or a non-AI technique.

In some embodiments, the method 400 comprises, at block 404, using a prediction model to predict whether the spectral reflectance characteristic of the common region is to remain unchanged between the first and second times based on an interpretation of the contextual information. In response to predicting that the spectral reflectance characteristic of the common region is to remain unchanged, the method 400 further comprises, at block 406, using the common region for comparing the first and second values.

Such embodiments refer to the process of interpreting/understanding the available contextual information to determine whether or not to use a certain region of the image data as the "common region". For example, the prediction model may have access to information about a plurality of objects and their corresponding physical properties such as timescale over which the change in physical property may occur and how information about how such a change many manifest in terms of a change in the spectral reflectance characteristic over time. The prediction model may be implemented based on an AI technique and/or a non-AI technique. The prediction model may be configured (e.g., by training or otherwise being set-up with predefined functions) to predict whether the spectral reflectance characteristic of the common region is to remain unchanged based on information (such as a database) about the physical property evolution of various types of materials/objects in various settings. The prediction model may then "look up" the expected evolution of the physical property (and corresponding spectral reflectance characteristic) over time providing the prediction model is sufficiently information of any relevant parameters (e.g., timeframe, an identification of the type of material/object, etc.). In some cases, the prediction model may be trained to predict based on learning from a dataset indicative of a material/object and corresponding spectral reflectance characteristics at various stages of evolution of the physical property.

Fig. 5 refers to a method 500 of determining contextual information according to an embodiment. The method 500 may be implemented by processing circuitry such as described above. In this embodiment, the method 500 may be used in conjunction with the method 100 and/or any block of any related method described above such as the method 400.

The method 500 comprises, at block 502, determining the contextual information based on at least one of: an expected spectral reflectance characteristic of a recognizable feature associated with the common region; a specified type of the scene; and/or temporal information associated with the first and second image data. An AI technique or a 'classical' non-AI technique may be used to determine the contextual information e.g., image recognition, intensity histogram analysis, etc.

In some cases, the recognizable feature may be the iris, clothing and/or skin not affected by the event such as the personal care activity. In some cases, the specified type of scene may be inside/outside, daytime, nighttime, sunset, etc. In some cases, the temporal information may be indicative of a likelihood of the color being the same.

Some elements in a scene may change their spectral reflectance characteristic over a long timescale but this characteristic may remain constant over a shorter timescale. If the timing of when the images were taken is within the shorter timescale, the "temporal information" may represent contextual information indicative of the spectral reflectance characteristic being unlikely to change by much.

The specified type of scene may indicate contextual information about the likelihood of common region changing its spectral reflectance characteristic. For example, an analysis of the color temperate (e.g., by a histogram analysis or another analysis such as using AI techniques) may indicate a certain period of time has elapsed (e.g., daytime has a different color temperature to sunset, etc.). In another example, understanding that the image has been taken inside or outside may indicate that certain elements can or cannot be used as a common region. For example, if one image is taken indoors and another is taken outdoors, the common region may be part of an object such as a subject in both the images. In another example, knowledge about the type of scene may indicate certain regions that could be used as the reference "common region".

Fig. 6 refers to a method 600 of obtaining a color transformation function according to an embodiment. The method 600 may be implemented by processing circuitry such as described above. In this embodiment, the method 600 may be used in conjunction with the method 100 and/or any block of any related method described above.

The method 600 comprises, at block 602, identifying a plurality of common regions in the first and second image data where the spectral reflectance characteristic associated with each identified common region is different.

For each common region of the plurality of common regions, the method 600 further comprises, at block 604, comparing the first value with the second value to obtain a color-dependent color transformation function for reducing the color variation in the target region between the first and second image data due to the difference associated with imaging conditions at the first and second times. The color-dependent color transformation function may be indicative of a plurality of color transformation factors. Each color transformation factor may be associated with a different color channel and may be configured to reduce, in its respective color channel, the color variation between the first and second image data due to the difference associated with imaging conditions at the first and second times.

The method 600 may be implemented where a linear color transformation might otherwise be inaccurate for more than one color channel. For example, certain colors may be affected differently by the imaging conditions such that the same linear color correction factor applied to all the different color channels leads to an accurate correction of a certain color channel but an inaccurate correction of another color channel. By obtaining the color-depending color transformation function, each color channel may be accurately corrected.

Fig. 7 refers to a method 700 of generating image data according to an embodiment. The method 700 may be implemented by processing circuitry such as described above. In this embodiment, the method 700 may be used in conjunction with the method 100 and/or any block of any related method described above.

The method 700 comprises, at block 702, generating third image data (e.g., image (c) in Fig. 2) by transforming, using the color transformation function, a set of values of the color parameter for the target region of the first image data or the second image data. The generated third image data comprises a set of transformed values of the color parameter for the target region of the first image data or the second image data, respectively.

Each value of the set of values may refer to at least one component of a color model system representative of the color at a pixel in the first or second image data. Similarly, each transformed value of the set of transformed values may refer to at least one component of a color model system representative of the color at a pixel in the third image data.

In some embodiments relating to the method 700, the third image data is generated by transforming the second image data using the color transformation function such that the color variation in the target region between the first and second image data due to the difference associated with imaging conditions at the first and second times is reduced between the first and third image data.

In some embodiments relating to the method 700, a comparison of the target region between the first and third image data is indicative of a physical change to the object (i.e., a change in physical property) as a result of the event. The "comparison" may refer to the measured change in the spectral reflectance characteristic in the target region. Analysis of this comparison may indicate information about the event such as a change in the physical property caused by the event.

In some embodiments, the object is a subject (e.g., the subject 202 depicted in Fig. 2) and the event comprises a treatment performed on the subject.

In some embodiments, the event comprises moving the object to a different place (e.g., by shipping as part of a supply chain distribution) or doing any activity that might intentionally or unintentionally cause a physical change to the object.

Fig. 8 refers to a method 800 of transforming imaging data according to an embodiment. The method 800 may be implemented by processing circuitry such as described above. In this embodiment, the method 800 may be used in conjunction with the method 100 and/or any block of any related method described above.

The color parameter referred to in the method 100 and related embodiments is based on at least one component of a color model system. In this regard, the method 800 comprises, at block 802, transforming raw imaging data acquired by an imaging system (e.g., the imaging system 206 of Fig. 2) to generate the first and second image data in accordance with the color model system. For example, the raw imaging data may represent colors in terms of one color model system (such as red-green-blue (RGB) or similar) and the transformed imaging data corresponding to the first and second imaging data may represent colors in terms of another color model system such as described below.

In some embodiments, the at least one component of the color model system comprises hue and/or saturation of an HSL-based color model system.

In some embodiments, the at least one component of the color model system comprises lightness and/or a color coordinate of a color model system specified by International Commission on Illumination, CIE. Such color model systems specified by CIE include the CIELAB color system (via the L^{∗}a^{∗}b^{∗} color space) CIELUV color system (via the L^{∗}u^{∗}v color space) systems.

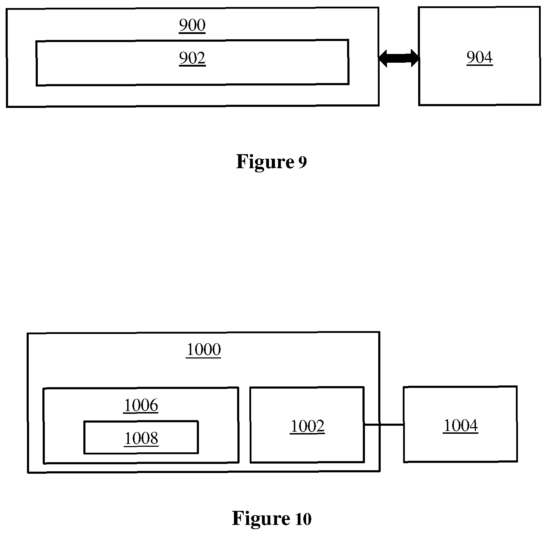

Fig. 9 is a schematic drawing of a non-transitory machine-readable medium 900 for determining spectral reflectance characteristics according to an embodiment. The non-transitory machine-readable medium 900 stores instructions 902 which, when executed by processing circuitry 904 (such as described in relation to Fig. 2), cause the processing circuitry 904 to implement the functionality of various embodiments described herein (e.g., by executing any of the methods 100, 400, 500, 600, 700, 800 or related embodiments).

Fig. 10 is a schematic drawing of an apparatus 1000 for determining spectral reflectance characteristics according to an embodiment. The apparatus 1000 comprises processing circuitry 1002 communicatively coupled to an interface 1004 (such as a communications interface) for communicating data between the processing circuitry 1002 and other devices such as referred to in Fig. 2. With reference to Fig. 2, the processing circuitry 1002 may correspond to the processing circuitry 210 and/or processing circuitry implemented by the remote computing system 216. The interface 1004 may receive the first and second image data such as referred to in the method 100.

The apparatus 1000 further comprises a machine-readable medium 1006 (e.g., a non-transitory machine-readable medium or other appropriate type of storage) storing instructions 1008 which, when executed by the processing circuitry 1002, cause the processing circuitry 1002 to implement the functionality of various embodiments described herein (e.g., by executing any of the methods 100, 400, 500, 600, 700, 800 or related embodiments).

For example, in the case of the method 100, the processing circuitry 1002 implements the functionality of blocks 104 to 112 based on the received first and second image data referred to in block 102.

While the invention has been illustrated and described in detail in the drawings and foregoing description, such illustration and description are to be considered illustrative or exemplary and not restrictive; the invention is not limited to the disclosed embodiments.

One or more features described in one embodiment may be combined with or replace features described in another embodiment.

Embodiments in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, flash storage, etc.) having computer readable program codes therein or thereon.

The present disclosure is described with reference to flow charts and block diagrams of the method, devices, and systems according to embodiments of the present disclosure. Although the flow charts described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine readable instructions.

The machine-readable instructions may, for example, be executed by a general-purpose computer, a special purpose computer, an embedded processor, or processors of other programmable data processing devices to realize the functions described in the description and diagrams. In particular, a processor or processing circuitry, or a module thereof, may execute the machine-readable instructions. Thus, functional modules of apparatus and other devices described herein may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine-readable instructions may also be stored in a computer readable storage that can guide the computer or other programmable data processing devices to operate in a specific mode.

Such machine-readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the embodiments of the present disclosure.

Elements or steps described in relation to one embodiment may be combined with or replaced by elements or steps described in relation to another embodiment. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method (100) for determining, as a result of an event, a change in a spectral reflectance characteristic of a target region of an object present in first image data and second image data, wherein the first image data corresponds to a scene comprising the object at a first time prior to occurrence of the event, wherein the second image data corresponds to a scene comprising the object at a second time after the occurrence of the event, the method comprising:
receiving (102) the first image data and the second image data;
identifying (104) a common region, different to the target region, in the first and second image data, wherein the common region has a different apparent color in the first and second image data due to a difference associated with imaging conditions at the first and second times, and wherein a spectral reflectance characteristic of the common region is predicted, based on contextual information associated with the common region, to remain unchanged between the first and second times;
determining (106):
a first value of a color parameter associated with the common region in the first image data;
a second value of the color parameter associated with the common region in the second image data;
a third value of the color parameter associated with the target region in the first image data; and
a fourth value of the color parameter associated with the target region in the second image data;
comparing (108) the first and second values to obtain a color transformation function for reducing a color variation in the target region between the first and second image data due to the difference associated with imaging conditions at the first and second times;
applying (110) the color transformation function to one of the third value or fourth value to generate a transformed value; and
comparing (112) the transformed value with the other of the third value or fourth value to determine the change in the spectral reflectance characteristic of the target region as a result of the event.

2. The method (400) of claim 1, comprising using (402) an image recognition model to identify the common region in the first and second image data.

3. The method (400) of any of claims 1 to 2, comprising:
using a prediction model (404) to predict whether the spectral reflectance characteristic of the common region is to remain unchanged between the first and second times based on an interpretation of the contextual information; and
in response to predicting that the spectral reflectance characteristic of the common region is to remain unchanged, using (406) the common region for comparing the first and second values.

4. The method (500) of any of claims 1 to 3, comprising determining (502) the contextual information based on at least one of:
an expected spectral reflectance characteristic of a recognizable feature associated with the common region;
a specified type of the scene; and/or
temporal information associated with the first and second image data.

5. The method of any of claims 1 to 4, wherein the difference associated with imaging conditions at the first and second times comprises at least one of:
a difference in illumination conditions at the first and second times;
a difference in terms of type of an imaging system used for imaging at the first and second times; and/or
a difference in terms of an imaging setting associated with the imaging system used for imaging at the first and second times.

6. The method of any of claims 1 to 5, wherein the first and second values are each based on an average of a plurality of values of the color parameter derived from the common region in the first and second image data, respectively.

7. The method (600) of any of claims 1 to 6, comprising:
identifying (602) a plurality of common regions in the first and second image data, wherein the spectral reflectance characteristic associated with each identified common region is different; and
for each common region of the plurality of common regions, comparing (604) the first value with the second value to obtain a color-dependent color transformation function for reducing the color variation in the target region between the first and second image data due to the difference associated with imaging conditions at the first and second times, wherein the color-dependent color transformation function is indicative of a plurality of color transformation factors, wherein each color transformation factor is associated with a different color channel and is configured to reduce, in its respective color channel, the color variation between the first and second image data due to the difference associated with imaging conditions at the first and second times.

8. The method (700) of any of claims 1 to 7, comprising generating (702) third image data by transforming, using the color transformation function, a set of values of the color parameter for the target region of the first image data or the second image data, wherein the generated third image data comprises a set of transformed values of the color parameter for the target region of the first image data or the second image data, respectively.

9. The method of claim 8, wherein:
the third image data is generated by transforming the second image data using the color transformation function such that the color variation in the target region between the first and second image data due to the difference associated with imaging conditions at the first and second times is reduced between the first and third image data; and
a comparison of the target region between the first and third image data is indicative of a physical change to the object as a result of the event.

10. The method of any of claims 1 to 9, wherein the object is a subject and the event comprises a treatment performed on the subject.

11. The method of any of claims 1 to 10, wherein the color transformation function is based on a difference between the first and second value of the color parameter associated with the common region in the first and second image data, respectively.

12. The method (800) of any of claims 1 to 11, wherein the color parameter is based on at least one component of a color model system, wherein the method further comprises transforming (802) raw imaging data acquired by an imaging system to generate the first and second image data in accordance with the color model system.

13. The method of claim 12, wherein the at least one component of the color model system comprises one of:
hue and/or saturation of a hue-saturation-luminance, HSL-based color model system; or
lightness and/or a color coordinate of a color model system specified by International Commission on Illumination, CIE.

14. A non-transitory machine-readable medium (900) storing instructions (902) which, when executed by processing circuitry (904), cause the processing circuitry to implement the method of any of claims 1 to 13.

15. Apparatus (1000) for determining, as a result of an event, a change in a spectral reflectance characteristic of a target region of an object present in first image data and second image data, wherein the first image data corresponds to a scene comprising the object at a first time prior to occurrence of the event, wherein the second image data corresponds to a scene comprising the object at a second time after the occurrence of the event, the apparatus comprising:
processing circuitry (1002) communicatively coupled to an interface (1004) for receiving (102) the first image data and the second image data; and
a machine-readable medium (1006) storing instructions (1008) which, when executed by the processing circuitry, cause the processing circuitry to:
identify (104) a common region, different to the target region, in the first and second image data, wherein the common region has a different apparent color in the first and second image data due to a difference associated with imaging conditions at the first and second times, and wherein a spectral reflectance characteristic of the common region is predicted, based on contextual information associated with the common region, to remain unchanged between the first and second times;
determine (106):
a first value of a color parameter associated with the common region in the first image data;
a second value of the color parameter associated with the common region in the second image data;
a third value of the color parameter associated with the target region in the first image data; and
a fourth value of the color parameter associated with the target region in the second image data;
compare (108) the first and second values to obtain a color transformation function for reducing a color variation in the target region between the first and second image data due to the difference associated with imaging conditions at the first and second times;
apply (110) the color transformation function to one of the third value or fourth value to generate a transformed value; and
compare (112) the transformed value with the other of the third value or fourth value to determine the change in the spectral reflectance characteristic of the target region as a result of the event.
